Europäisches Patentamt

European Patent Office

Office européen des brevets

(11) Veröffentlichungsnummer: **0 289 917 B1**

(12) **EUROPÄISCHE PATENTSCHRIFT**

(45) Veröffentlichungstag der Patentschrift: **10.11.93**

(51) Int. Cl.⁵: **C08F 297/04**

(21) Anmeldenummer: **88106694.8**

(22) Anmeldetag: **27.04.88**

(54) **Butadien-Styrol-Blockcopolymere mit unsymmetrischem Aufbau und deren Herstellung und Verwendung als Formmassen.**

(30) Priorität: **02.05.87 DE 3714711**

(43) Veröffentlichungstag der Anmeldung:
**09.11.88 Patentblatt 88/45**

(45) Bekanntmachung des Hinweises auf die
Patenterteilung:
**10.11.93 Patentblatt 93/45**

(84) Benannte Vertragsstaaten:
**BE DE FR GB IT NL**

(56) Entgegenhaltungen:
**FR-A- 2 240 244**
**GB-A- 1 414 924**
**US-A- 3 231 635**

(73) Patentinhaber: **BASF Aktiengesellschaft**
**Carl-Bosch-Strasse 38**
**D-67063 Ludwigshafen(DE)**

(72) Erfinder: **Bronstert, Klaus, Dr.**
**Gartenstrasse 26**
**D-6719 Carlsberg(DE)**
Erfinder: **Wagner, Daniel, Dr.**
**Prof.-Dillinger-Weg 44**
**D-6702 Bad Duerkheim(DE)**
Erfinder: **Schuch, Horst, Dr.**
**Kanzelbachstrasse 21**
**D-6804 Ilvesheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Blockcopolymere der allgemeinen Formel A-B-A' mit einem mittleren Molekulargewicht kleiner als 300.000, die aus 18 bis 40 Gewichtsprozent eines vinylaromatischen Kohlenwasserstoffs und 60 bis 82 Gewichtsprozent eines oder mehrerer gegebenenfalls teilweise oder vollständig hydrierter(n) Dienkohlenwasserstoffs (e) aufgebaut sind, und in denen A und A' je ein Polymerblock aus einem vinylaromatischem Kohlenwasserstoff und B ein Polymerblock aus einem oder mehreren gegebenenfalls teilweise oder vollständig hydrierten Dienkohlenwasserstoff(en) bedeutet, sowie die Herstellung dieser Blockcopolymere.

Bei derartigen Blockcopolymeren handelt es sich um polymere Stoffe, die für Formmassen mit guter Verarbeitbarkeit verwendet werden können.

Es ist bekannt, daß Blockcopolymere nach anionischen Polymerisationsverfahren aus vinylaromatischen Kohlenwasserstoffen und konjugierten Dienen unter Verwendung von organischen Alkalimetallinitiatoren erhalten werden können. Die vielfältigen Eigenschaften dergestalter Blockcopolymere hängen neben dem Gehalt an Dienen insbesondere vom Gehalt an vinylaromatischer Verbindung ab. Wenn dieser Gehalt gering ist, erhält man Blockcopolymere, die auch als thermoplastische Elastomere bezeichnet werden. Diese Polymere weisen gummielastisches Verhalten in nicht vulkanisiertem Zustand auf und eignen sich für vielfältige Einsatzgebiete wie z.B. zur Schlagzähmodifizierung von Styrolpolymerisaten oder als Bestandteile von Adhäsiven.

Blockcopolymere mit unsymmetrischem Aufbau aber mit einem sehr hohen Anteil an vinylaromatischer Komponente, z.B. solche mit 70 Gew.% und mehr, vereinigen Eigenschaften wie Schlagfestigkeit und Transparenz und werden daher u.a. auf dem Verpackungssektor eingesetzt (vgl. EP-A1-00 26 916). Verfahren zur Herstellung von hochstyrolhaltigen Blockcopolymeren werden u.a. in US-A-3 639 517 beschrieben.

Dreiblockcopolymere mit symmetrischem Aufbau der allgemeinen Struktur A-B-A, in denen die beiden terminalen A-Blöcke thermoplastische Polymerblöcke aus einem vinylaromatischen Kohlenwasserstoff wie z.B. Styrol bestehen, während der B-Block aus einem selektiv hydrierten Dienkohlenwasserstoff aufgebaut ist, werden u.a. in der US-A-Re 27 145 beschrieben. Der elastomere Mittelblock entsteht darin durch Hydrierbehandlung eines Butadienblocks, in dem 35 bis 55 Mol.% der kondensierten Butadieneinheiten 1,2-Konfiguration aufweisen. Blockcopolymere des Aufbaus Polystyrol-EPDM-Polystyrol weisen gegenüber solchen des Aufbaus Polystyrol-Polybutadien-Polystyrol eine wesentlich verbesserte Oxidationsbeständigkeit auf, was diesen thermoplastischen Elastomeren weitere Anwendungsgebiete erschließt. Analoge Dreiblockcopolymere werden auch auf Basis Styrol und Isopren hergestellt.

Aufgrund ihrer Dreiblockstruktur ist die Viskosität von Schmelzen solcher thermoplastischer Copolymerer sehr hoch und sowohl gegenüber Temperatur als auch gegenüber Scherung relativ empfindlich. Um einen guten Fluß der Schmelze und damit eine gleichmäßige Homogenität des Materials in Extrusions- und Spritzgußverarbeitung zu erzielen, sind hohe Verarbeitungstemperaturen und hohe Scherfelder erforderlich, die insbesondere bei nicht hydrierten Polystyrol-Polybutadien-Polystyrol-Dreiblockcopolymeren zu oxidativen Schädigungen des Materials führen.

Aufgabe der vorliegenden Erfindung war es daher, Dreiblockcopolymere mit guten mechanischen Eigenschaften zu entwickeln, die eine zum Stand der Technik verbesserte Verarbeitbarkeit besitzen.

Diese Aufgabe wurde gelöst durch Blockcopolymere nach Patentansprüchen 1 bis 2 sowie durch die Herstellung derartiger Blockcopolymeren nach Patentanspruch 3.

In den erfindungsgemäßen Blockcopolymeren ist das Verhältnis der thermoplastischen Endblöcke zum elastischen Mittelblock und es sind die relativen Molekulargewichte der einzelnen Blöcke zueinander in bestimmter Weise aufeinander abgestimmt, um ein Optimum an Eigenschaftskombinationen zu erhalten.

Unter Blockcopolymeren werden bekanntlich solche Copolymere verstanden, bei denen die unterschiedlichen Monomeren nicht statistisch in der Kette eingebaut sind, sondern in denen homopolymere Kettenabschnitte (Polymerblöcke) der verschiedenen Monomeren miteinander verknüpft sind. Bei den erfindungsgemäßen Blockcopolymeren mit unsymmetrischem Aufbau der allgemeinen Formel A-B-A' sind die unterschiedlichen homopolymeren Kettenabschnitte A und A' der gleichen Monomeren mit dem unterschiedlichen homopolymeren Kettenabschnitt B eines anderen Monomeren verbunden. Erfindungsgemäß soll das Gewichtsverhältnis der Polymerblöcke A zu A' kleiner oder gleich 1:5 und größer als 1:10 sein. Insbesondere soll das Gewichtsverhältnis der Polymerblöcke A zu A' kleiner oder gleich 1:6 und größer als 1:8 sein. Das Gewichtsverhältnis der Polymerblöcke A zu A' kann im Blockcopolymeren bestimmt werden durch oxidativen Abbau der unhydrierten Blockcopolymeren A-B-A' mit Osmiumtetroxid und Auswertung der Gelpermeationschromatogramme.

2

Außerdem muß das mittlere Molekulargewicht des Polymerblocks A 2000 bis kleiner als 5.000, bevorzugt 2500 bis 4000 und des Polymerblocks A' 10.000 bis kleiner als 50.000, bevorzugt 15.000 bis 30.000 sein. Das Molekulargewicht des Polydienblocks B muß mindestens 18.000 sein. Das mittlere Molekulargewicht der Polymerblöcke A und A' wird bestimmt durch Gelpermeationschromatographie, wie später beschrieben. Bei der Angabe des Malekulargewichts handelt es sich um das mittlere Molekulargewicht aus dem Gewichtsmittel $\overline{M}_w$.

Das mittlere Molekulargewicht (Gewichtsmittel $\overline{M}_w$) des Blockcopolymeren A-B-A' , bestimmt durch Gelpermeationschromatographie wie später beschrieben, muß kleiner als 300.000, bevorzugt unter 180.000 sein. Die erfindungsgemäßen Blockcopolymeren bestehen aus 18 bis 40, bevorzugt 25 bis 35 Gewichtsprozent eines vinylaromatischen Kohlenwasserstoffs und 60 bis 82, bevorzugt 65 bis 75 Gewichtsprozent eines oder mehrerer ggf. teilweise oder vollständig hydrierter(n) Dienkohlenwasserstoffs(e). Bevorzugt sind Blockcopolymere mit teilweise oder vollständig hydrierten Dienkohlenwasserstoffen, wobei unter teilweise ein Hydrierungsgrad von mehr als 50 %, insbesondere mehr als 80 % und unter vollständig ein Hydrierungsgrad von mehr als 95 % verstanden wird. Das Gewichtsverhältnis der Monomeren im Blockcopolymeren kann nach üblichen Methoden bestimmt werden, z.B. durch oxidativen Abbau mit Osmiumtetroxid und gravimetrischer Analyse, IR-spektroskopisch oder über eine Bestimmung des Brechungsindex.

In den erfindungsgemäßen Blockcopolymeren können die Polymerblöcke A und A' aus vinylaromatischen Kohlenwasserstoffen wie z.B. Styrol, $\alpha$-Methylstyrol und kernalkylierten Styrolen bestehen, wobei Styrol bevorzugt ist. Als Diene für den Polymerblock B kommen Butadien, Isopren, 2,3-Dimethylbutadien, Piperylen oder andere anionische polymerisierbare konjugierte $C_4$- bis $C_{12}$-Diene in Betracht, wobei 1,3-Butadien und Isopren bevorzugt sind.

Die Herstellung von Blockcopolymeren aus konjugierten Dienen und vinylaromatischen Kohlenwasserstoffen kann nach bekannten Methoden der anionischen Blockpolymerisation durch sequentielle Addition der Monomeren oder Kopplungstechniken erfolgen. Derartige Verfahren werden z.B. in den Literaturstellen US-A-3 251 905, 3 390 207, 3 507 934, 3 598 887 und 4 219 627 ausführlich beschrieben.

Als Initiatoren für die Polymerisation eignen sich alkalimetallorganische Verbindungen, vorzugsweise Lithiumalkyle wie z.B. Methyllithium. Ethyllithium, n-, sek-Butyllithium oder Isopropyllithium. Besonders bevorzugt wird n- oder sek.-Butyllithium eingesetzt.

Als Lösungsmittel für die Polymerisation eignen sich zweckmäßig geradkettige und verzweigte aliphatische Kohlenwasserstoffe wie z.B. n-Octan oder n-Hexan, sowie einfache oder substituierte cycloaliphatische und aromatische Kohlenwasserstoffe wie z.B. Cyclohexan, Methylcyclohexan, Toluol sowie jede beliebige Mischung der aliphatischen, cycloaliphatischen und aromatischen Kohlenwasserstoffe. Vorteilhaft eignet sich Cyclohexan als Lösungsmittel.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.% geeignet.

Alle Einsatzstoffe müssen von Sauerstoff und protonenaktiven Verunreinigungen befreit werden, was z.B. durch Kontaktieren mit Metallorganylen oder durch adsorptive Reinigung z.B. an Aluminiumoxid erfolgen kann. Die Durchführung der Polymerisation erfolgt unter Inertgasbedingungen bei Temperaturen von -20 bis 130°C, vorzugsweise bei 25 bis 80°C. Es wird bei Drucken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Gegebenenfalls können die aktiven Endgruppen der Polymeren auch funktionalisiert werden durch Umsetzung mit geeigneten Reagentien wie z.B. Ethylenoxid, Ethylensulfid oder Schiff'schen Basen.

Erfindungsgemäß wird so vorgegangen, daß in einer ersten Polymerisationsstufe der vinylaromatische Kohlenwasserstoff zur Bildung des A- oder A'-Blocks vollständig auspolymerisiert wird, im zweiten Polymerisationsschritt der Dienkohlenwasserstoff zur Bildung des B-Blocks vollständig umgesetzt wird, und anschließend in die zweite Teilmenge des vinylaromatischen Kohlenwasserstoffs zur Bildung des A- bzw. A'-Blocks aufpolymerisiert wird, wobei die Teilenge an vinylaromatischer Verbindung zur Herstellung des A'-Blocks mindestens das fünffache, höchstens das 10fache, der Gewichtsmenge beträgt, die für die Bildung des A-Blocks verwendet wird.

Gegebenenfalls kann die zweite Teilmenge des vinylaromatischen Kohlenwasserstoffs auch in Mischung mit dem Dienkohlenwasserstoff in der zweiten Polymerisationsstufe zugesetzt werden, wobei, wie dem Fachmann bekannt ist, zunächst der Dienkohlenwasserstoff vollständig aufpolymerisiert und der Endblock aus vinylaromatischer Kohlenwasserstoffverbindung mit dem Dienkohlenwasserstoffblock durch einen schmalen Übergangsbereich verknüpft ist, in dem beide Monomere enthalten sind.

EP 0 289 917 B1

Die erhaltenen Blockcopolymeren mit unsymmetrischem Aufbau können nach üblichen Verfahren durch Hydrierbehandlung in Polymere überführt werden, in denen die aliphatischen ungesättigten Bindungen teilweise oder vollständig abgesättigt sind. Die Hydrierung wird vorzugsweise mit molekularem Wasserstoff und Katalysatoren auf Basis von Metallen oder Metallsalzen der 8. Gruppe des Periodensystems durchgeführt. Sie kann in heterogener Phase z.B. mit Raney-Nickel oder in homogener Phase mit Katalysatoren auf Basis von Salzen, insbesondere von Carboxylaten, Alkoxiden oder Enolaten des Kobalts, Nickels oder Eisens die mit Metallalkylen, insbesondere Aluminiumalkylen kombiniert sind erfolgen. Verfahren zur selektiven Hydrierung von Blockcopolymeren werden u.a. in den Druckschriften US-A-3 113 986 und 4 226 952 beschrieben.

Zur Isolierung des Polymeren kann das Polymerisationsgemisch nach bekannten Verfahren wahlweise direkt zur Trockene erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden. Die Aufarbeitung ist nicht Bestandteil der Erfindung.

Die nach dem erfindungsgemäßen Verfahren hergestellten Blockcopolymere können in an sich bekannter Weise mit gebräuchlichen Stabilisatoren, Verstärkungsmaterialien, Füllstoffen und verschieden weiteren Zusatzmitteln versetzt werden. Sie sind als Formmassen für Extrusion und Spritzguß besonders gut geeignet.

Entgegen der herrschenden Lehre [vgl. A.Noshay, J.E. McGrath in "Block Copolymers" Academic Press, New York, San Francisco, London (1977), Seiten 198 bis 200] weisen Formkörper aus dem erfindungsgemäßen Blockcopolymeren ähnlich gute mechanische Eigenschaften auf, wie sie für thermoplastische Elastomere mit symmetrischem Blockaufbau bekannt sind. So ist dem Fachmann bekannt, daß die Eigenschaften thermoplastischer Elastomere, die auf der Mikrophasenseparation beruhen, verschwinden, wenn das Molekulargewicht des Polystyrolblocks unter einen kritischen Wert von 6000 bis 7000 fällt. Überraschend ist nun, daß das erfindungsgemäße Blockcopolymere mit einem terminalen Styrolblock, der ein Molekulargewicht kleiner als 5000 aufweist, den Vorteil einer wesentlich verbesserten Verarbeitbarkeit bei Erhalt guter mechanischer Eigenschaften verknüpft. Die Formmassen aus dem Blockcopolymer vom erfindungsgemäßen Typ weisen darüber hinaus eine besonders hohe Transparenz und verbesserten Oberflächenglanz auf als die Formmassen aus den Blockcopolymeren von bekannten Typ.

Die Blockcopolymeren werden wie nachstehend charakterisiert:

1. Die mittleren Molekulargewichte (Gewichtsmittel $\overline{M}_w$) wurden durch Gelpermeationschromatographie anhand von Eichkurven für Polystyrol bzw. Polybutadien (Eichsubstanzen $\overline{M}_w/\overline{M}_n$ = ca. 1) bei 23°C in 0,125 gew.%iger Tetrahydrofuranlösung bei einer Durchflußgeschwindigkeit von 1,5 ml/min ermittelt. Bei Blockcopolymeren wurde das arithmetische Gewichtsmittel zwischen den beiden Eichkurven zugrundegelegt [vgl. G. Glöckner, "Polymercharakterisierung durch Flüssigkeitschromatographie", Verlag A. Hüthig, Heidelberg, 1982].

2. Die Glastemperaturen wurden nach K.H. Illers, Kolloid-Zeitschrift, 190 (1), 16 bis 34 (1963) bestimmt.

3. Die Charakterisierung des Blockaufbaus erfolgte durch oxidativen Abbau der unhydrierten Blockcopolymeren mit Osmiumtetroxid und Gelpermeationschromatographie.

4. Der Restdoppelbindungsgehalt der olefinisch ungesättigten Bindungen wurde durch Fourier-Analyse der Infrarot-Spektren ermittelt.

Die folgenden Beispiele erläutern die Herstellung und die Eigenschaften von erfindungsgemäßen Blockcopolymeren mit unsymmetrischem Aufbau.

Beispiel 1

In einem thermostatisierbaren Rührkessel werden unter Reinstickstoff 7000 g gereinigtes, wasserfreies Cyclohexan, 35 g Tetrahydrofuran und 150 g Styrol vorgelegt. Nach dem Austitrieren der noch vorhandenen protonenaktiven Verunreinigungen mit sek.-Butyllithium, werden 45 mmol sek.-Butyllithium (1,4 molare Lösung in Cyclohexan/Isopentan) zugesetzt. Die Temperaturen der Polymerisation werden zwischen 45 und 65°C etwa 1 h gehalten, um den ersten Block aus Polystyrollithium zu bilden.

Sodann wird in den Rührkessel 1950 g gereinigtes monomeres 1,3-Butadien eingespeist und bei Temperaturen zwischen 50 und 67°C bis zur vollständigen Umsetzung unter Bildung von Ketten aus zwei Segmenten Polystyrol-Polybutadienyllithium polymerisiert. Die Polymerisation ist nach 1 h vollständig. Im Anschluß erfolgt die Zugabe von weiteren 900 g Styrol zur Bildung des dritten Blocks, dessen Polymerisation bei 60 bis 70°C nach etwa 1 h vollständig ist. Danach wird 15 ml Isopropanol zugesetzt, um den Abbruch der lebenden Polymerketten sicherzustellen.

4

Nach jeder Polymerisationsstufe wird dem Reaktionsgefäß eine Probemenge für analytische Zwecke entnommen.

Die selektive Hydrierung des Blockcopolymeren aus Beispiel 1 erfolgt durch Zugabe einer Katalysatorlösung aus 1,4 g Nickel (II) acetylacetonat in 80 g Toluol, versetzt mit 30 ml einer 20 gew.%igen Lösung von Aluminiumtriisobutyl in Hexan. und einem Wasserstoffdruck von 15 bar bei 80 °C Hydriertemperatur. Nach 6 h wird ein Restdoppelbindungsgehalt von weniger als 3 % der ursprünglich vorhandenen olefinischen Ungesättigtheit erreicht. Die Aufarbeitung des Blockcopolymer erfolgt durch Entfernung des Lösungsmittels mittels Extruderentgasung.

Das A-B-A'-Dreiblockcopolymer weist folgende Struktur auf:

| | |
|---|---|
| Molekulargewicht A-Block | 3.500 g/mol |
| Molekulargewicht A'-Block | 21.000 g/mol |
| Gesamtmolekulargewicht | 67.000 g/mol |
| Blockpolystyrol | 34,8 Gew.% |
| Glastemperatur | -61 °C |

Beispiel 2

Wie in Beispiel 1 beschrieben, wird ein A-B-A'-Dreiblockcopolymer mit nachstehender Rezeptur hergestellt:

7000 g Cyclohexan

35 g Tetrahydrofuran

45 mmol sek.-Butyllithium

175 g Styrol (Monomer in der 1. Stufe - A-Block)

1950 g 1,3-Butadien (Monomer in der 2. Stufe - B-Block)

875 g Styrol (Monomer in der 3. Stufe - A'-Block)

Hydrierbehandlung und Aufarbeitung werden in gleicher Weise wie in Beispiel 1 durchgeführt.

Das A-B-A'-Dreiblockcopolymerisat wird wie nachstehend charakterisiert:

| | |
|---|---|
| Molekulargewicht A-Block | 4.600 |
| Molekulargewicht A'-Block | 23.200 |
| Gesamtmolekulargewicht | 75.000 |
| Blockpolystyrol | 34 Gew.% |
| Restdoppelbindungsgehalt nach Hydrierung | <3 % |

Beispiel 3

Analog Beispiel 1 wird ein Dreiblockcopolymer mit nachstehender Rezeptur dargestelt:

7000 g Cyclohexan

35 g Tetrahydrofuran

45 mmol sek.-Butyllithium

115 g Styrol (Monomer in der 1. Stufe - A-Block)

1950 g 1,3-Butadien (Monomer in der 2. Stufe - B-Block)

935 g Styrol (Monomer in der 3. Stufe - A'-Block)

Das A-B-A'-Dreiblockcopolymerisat wird wie nachstehend charakterisiert:

| | |
|---|---|
| Molekulargewicht A-Block | 2.600 |
| Molekulargewicht A'-Block | 22.000 |
| Gesamtmolekulargewicht | 72.000 |
| Blockpolystyrol | 34,6 Gew.% |
| Restdoppelbindungsgehalt | <3 % (nach Hydrierbehandlung gemäß Beispiel 1). |

Vergleichsbeispiel A

Zum Vergleich wird ein A-B-A'-Dreiblockcopolymer ,aber mit symmetrischem Aufbau, analog wie im vorangegangenen Beispiel 1 hergestellt.

Rezeptur:

7.000 g Cyclohexan
35 g Tetrahydrofuran
(45 mmol sek.-Butyllithium)
525 g Styrol (Monomer in der 1. Stufe - A-Block)
1.950 g 1,3-Butadien (Monomer in der 2. Stufe - B-Block)
525 g Styrol (Monomer in der 3. Stufe - A'-Block)
Hydrierbehandlung und Aufarbeitung werden in gleicher Weise wie in Beispiel 1 durchgeführt.

Das A-B-A'-Dreiblockcopolymer wird wie nachstehend charakterisiert:

| | |
|---|---|
| Molekulargewicht A-Block | 12.000 g/mol |
| Molekulargewicht A'-Block | 11.500 g/mol |
| Gesamtmolekulargewicht | 68.000 g/mol |
| Blockpolystyrol | 34 Gew.% |
| Glastemperatur | -58 °C |
| Restdoppelbindungsgehalt nach Hydrierung | <3 %. |

Vergleichsbeispiel B

Zum Vergleich wird ein A-B-A'-Dreiblockcopolymer analog wie in den vorangegangenen Beispielen beschrieben hergestellt:

Rezeptur:

7000 g Cyclohexan
35 g Tetrahydrofuran
45 mmol sek.-Butyllithium
300 g Styrol (Monomer in der 1. Stufe A-Block)
1950 g 1,3-Butadien (Monomer in der 2. Stufe B-Block)
750 g Styrol (Monomer in der 3. Stufe A'-Block)

Charakterisierung:

| | |
|---|---|
| Molekulargewicht A-Block | 6.800 |
| Molekulargewicht A'-Block | 17.000 |
| Gesamtmolekulargewicht | 69.000 |
| Blockpolystyrol | 34 Gew.% |
| Glastemperatur | -58 °C |
| Restdoppelbindungsgehalt nach Hydrierung | <3 %. |

Zur Herstellung von Proben für die Prüfung der mechanischen Eigenschaften werden die entstandenen Granulate aus Beispiel 1 und Vergleichsbeispiel A zu Stufenplatten spritzgegossen. Das erfindungsgemäße Blockcopolymer läßt sich bei 240 °C (Spritzgußtemperatur) sehr leicht entformen. Die Formkörper aus dem erfindungsgemäßen Blockcopolymer weisen ein tadelloses Aussehen, hohen Oberflächenglanz und Transparenz auf.

Um zu Formkörpern aus dem zu Vergleichszwecken hergestellten Blockcopolymer zu gelangen, muß die Spritzgußtemperatur um 20 °C erhöht werden. Geformte Proben dieses Polymeren haben stumpfe Oberflächen und besitzen fast keine Transparenz.

Die Ergebnisse der durchgeführten Tests bezüglich der mechanischen Eigenschaften der geformten Proben sind nachstehend aufgeführt:

Mechanische Prüfung der Blockcopolymeren
(Zugversuch nach DIN 53 504 an S2 Normstäben)

| Prüfgeschwindigkeit | 250 mm/min |
|---|---|
| Prüftemperatur | 23 °C |

|  |  | Beispiel 1 | Vergleichs-beispiel A |
|---|---|---|---|
| Reißfestigkeit | [N/mm²] | 8,72 | 17,47 |
| Reißdehnung | [%] | 570 | 574 |
| Zugfestigkeit bei 300 % Maschinendehnung | [N/mm²] | 4,10 | 2,68 |

Zur Herstellung von Proben für die Prüfung der mechanischen Eigenschaften werden die Dreiblockcopolymeren gemäß Beispiel 2 und 3 und gemäß Vergleichsbeispiel B zu Platten verpreßt (T = 160 °C; 3 Minuten vorpressen bei 5 bar; 2 Minuten pressen bei 200 bar; 3 Minuten abkühlen bei 200 bar bis auf Raumtemperatur).

Die Ergebnisse der durchgeführten Tests bezüglich der mechanischen Eigenschaften (nach DIN 53 4504 an S2 Stäben) sind nachstehend aufgeführt:

|  |  | Beispiel 2 | Beispiel 3 | Vergleichs-beispiel B |
|---|---|---|---|---|
| Reißfestigkeit | [N/mm²] | 21,3 | 9,63 | 25,75 |
| Reißdehnung | [%] | 463 | 475 | 498 |

Die gegenüber dem Stand der Technik verbesserte Verarbeitbarkeit der erfindungsgemäßen Blockcopolymerisate drückt sich gleichermaßen in den Schmelzviskositäten aus, wie aus nachstehend beschriebenen Messungen zu entnehmen ist.

Die Fließeigenschaften der verschiedenen, hydrierten A-B-A'-Dreiblockcopolymeren wurden in einem Stickstoff-Kapillarviskosimeter gemessen (Kapillarabmessungen: L/R = 18, 09).

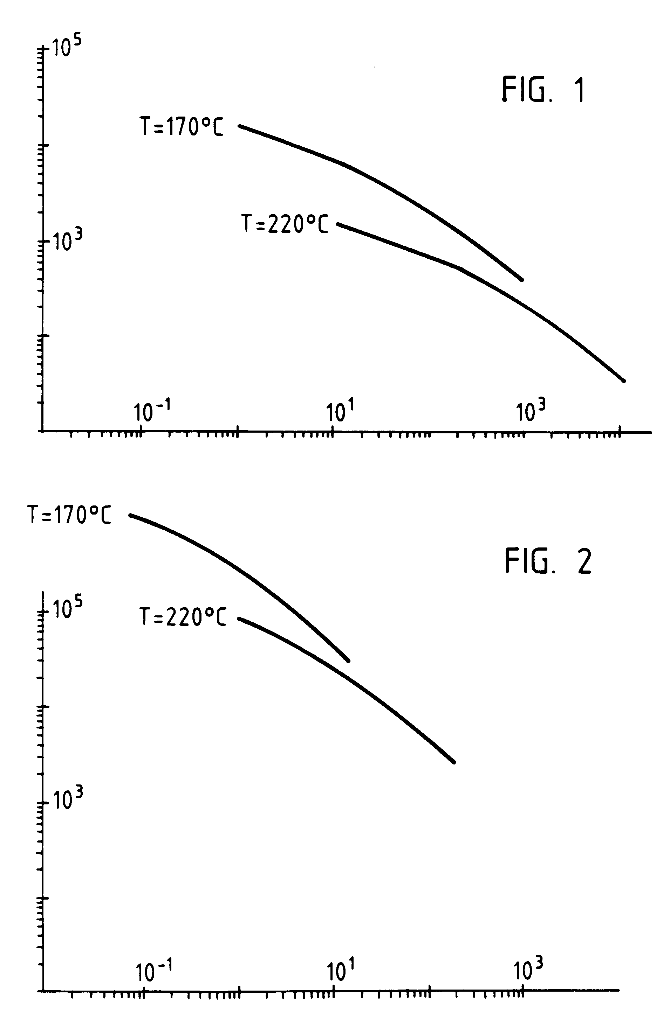

In Figur 1 ist auf der Ordinatenachse die scheinbare Viskosität ETA [Pas] gegen die scheinbare Schergeschwindigkeit D [sec⁻¹] (Abzisse) für Schmelzen des Blockcopolymeren (Beispiel 1) bei T = 170 °C und T = 220 °C aufgetragen.

In Figur 2 ist die gleiche Auftragung für Schmelzen des Blockcopolymerisats (Vergleichsbeispiel A) bei T = 170 °C und T = 220 °C gewählt.

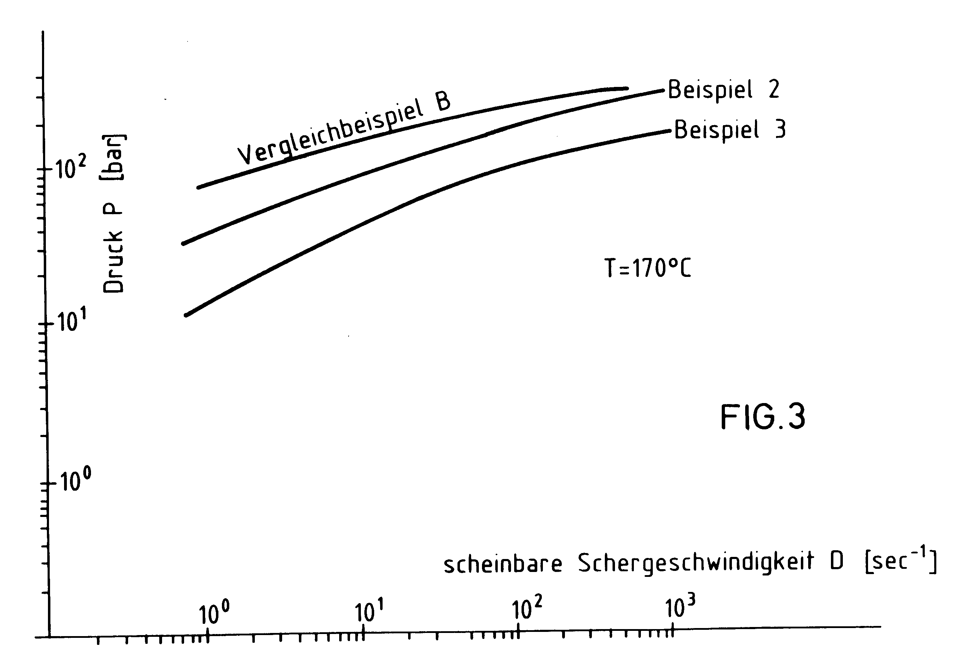

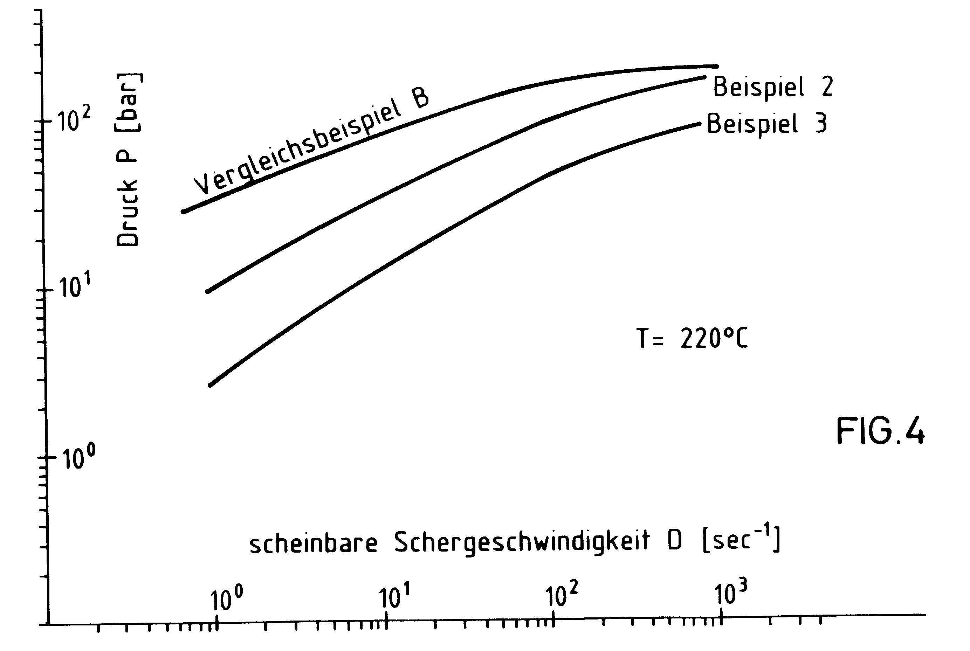

In Figur 3 und Figur 4 sind zur weiteren Veranschaulichung die Druck-Durchsatzkennlinien für Schmelzen der Blockcopolymerisate gemäß Beispiel 2 und 3 und des Vergleichsbeispiels B angegeben. Aufgetragen ist der Druck p [bar] (Ordinate) gegen die scheinbare Schergeschwindigkeit D [sec⁻¹] (Abzisse), wobei D über den Massendurchsatz berechnet wurde.

**Patentansprüche**

1. Blockcopolymere der allgemeinen Formel A-B-A' mit einem mittleren Molekulargewicht von weniger als 300.000, die aus 18 bis 40 Gewichtsprozent eines vinylaromatischen Kohlenwasserstoffs und 60 bis 82 Gewichtsprozent eines oder mehrerer gegebenenfalls teilweise oder vollständig hydrierter(n) Dienkohlenwasserstoffs(e) aufgebaut sind, in denen A und A' je ein Polymerblock aus vinylaromatischem Kohlenwasserstoff und B ein Polymerblock aus einem oder mehreren gegebenenfalls teilweise oder vollständig hydrierten Dienkohlenwasserstoff(en) bedeutet, dadurch gekennzeichnet, daß das Gewichtsverhältnis der Polymerblöcke A zu A' kleiner oder gleich 1:5 und größer als 1:10, das mittlere Molekulargewicht des kleineren Polymerblocks A 2000 bis kleiner als 5000, das, des größeren Polymerblocks A' 10.000 bis kleiner als 50.000 und das des Polymerblocks B mindestens 18.000 ist, wobei die Molekulargewichte jeweils Gewichtsmittel sind.

2. Blockcopolymere nach Anspruch 1, dadurch gekennzeichnet, daß das mittlere Molekulargewicht des Polymerblocks A 2500 bis 4000 und das des Polymerblocks A' 15.000 bis 30.000 ist.

3. Verfahren zur Herstellung der Blockcopolymeren nach Anspruch 1 mit Hilfe von alkalimetallorganischen Initiatoren unter Inertgasbedingungen bei Temperaturen von -20 bis 130°C, dadurch gekennzeichnet, daß in einer ersten Polymerisationsstufe der vinylaromatische Kohlenwasserstoff zur Bildung des A- oder A' - Blocks vollständig auspolymerisiert wird, im zweiten Polymerisationsschritt der Dienkohlenwasserstoff zur Bildung des B-Blocks vollständig umgesetzt wird, und anschließend die zweite Teilmenge des vinylaromatischen Kohlenwasserstoffs zur Bildung des A- bzw. A' -Blocks aufpolymerisiert wird, wobei die Teilmenge an vinylaromatischer Verbindung zur Herstellung des A' -Blocks mindestens das fünffache, höchstens das 10fache der Gewichtsmenge beträgt, die für die Bildung des A-Blocks verwendet wird.

4. Verwendung der Blockcopolymeren nach Anspruch 1 zur Herstellung von Formmassen mit guter Verarbeitbarkeit.

## Claims

1. A block copolymer of the formula A-B-A' which has a mean molecular weight of less than 300,000 and consists of from 18 to 40% by weight of a vinylaromatic hydrocarbon and from 60 to 82% by weight of one or more partially or completely hydrogenated diene hydrocarbons and in which A and A' are each a polymer block of a vinylaromatic hydrocarbon and B is a polymer block of one or more partially or completely hydrogenated diene hydrocarbons, wherein the weight ratio of the polymer blocks A to A' is less than or equal to 1 : 5 and greater than 1 : 10, the mean molecular weight of the smaller polymer block A is from 2,000 to less than 5,000, that of the larger polymer block A' is from 10,000 to less than 50,000 and that of the polymer block B is not less than 18,000, the molecular weights each being weight average molecular weights.

2. A block copolymer as claimed in claim 1, wherein the mean molecular weight of the polymer block A is from 2,500 to 4,000 and that of the polymer block A' is from 15,000 to 30,000.

3. A process for the preparation of a block copolymer as claimed in claim 1 with the aid of an organo-alkali metal initiator under inert gas conditions at from -20 to 130°C, wherein, in a first polymerization stage, the vinylaromatic hydrocarbon is polymerised completely to form the A or A' block, in the second polymerization step the diene hydrocarbon is completely converted to form the B block and thereafter the second portion of the vinylaromatic hydrocarbon is polymerized on to form the A or A' block, the portion of vinylaromatic compound for the preparation of the A' block being not less than five times, and not more than 10 times, the weight used for the formation of the A block.

4. Use of a block copolymer as claimed in claim 1 for the preparation of a molding material having good processability.

## Revendications

1. Copolymères séquencés de la formule générale A-B-A', d'un poids moléculaire moyen inférieur à 300.000, constitués de 18 à 40% en poids d'un hydrocarbure vinylaromatique et de 60 à 82% en poids d'un ou plusieurs hydrocarbures diéniques, éventuellement partiellement ou totalement hydrogénés, dans lesquels A et A' représentent chacun une séquence polymérique d'un hydrocarbure vinylaromatique et B représente une séquence polymérique d'un ou plusieurs hydrocarbures diéniques, éventuelle-

EP 0 289 917 B1

ment partiellement ou totalement hydrogénés, caractérisés en ce que le rapport pondéral des séquences polymériques A à A' est inférieur ou égal à 1:5 et supérieur à 1:10, le poids moléculaire moyen de la plus petite séquence polymérique A varie de 2000 à moins de 5000, le poids moléculaire moyen de la plus grande séquence polymérique A' varie de 10.000 à moins de 50.000 et le poids moléculaire moyen de la séquence polymérique B atteint au moins 18.000, où les poids moléculaires représentent tous des moyennes en poids.

2. Copolymères séquencés suivant la revendication 1, caractérisés en ce que le poids moléculaire moyen de la séquence polymérique A varie de 2500 à 4000 et le poids moléculaire moyen de la séquence polymérique A' varie de 15.000 à 30.000.

3. Procédé de fabrication de copolymères séquencés suivant la revendication 1 à l'aide d'amorceurs constitués de composés organiques de métaux alcalins, sous une atmosphère d'un gaz inerte et à des températures de -20 à 130°C, caractérisé en ce que, au cours d'une première étape de polymérisation, on polymérise totalement l'hydrocarbure vinylaromatique en vue de la formation de la séquence A ou de la séquence A', au cours d'une seconde étape de polymérisation, on convertit totalement l'hydrocarbure diénique pour la formation de la séquence B et on polymérise ensuite la seconde fraction de l'hydrocarbure vinylaromatique pour la formation de la séquence A ou de la séquence A', où la fraction en composé vinylaromatique pour la réalisation de la séquence A' atteint au moins le quintuple et au plus le décuple de la proportion pondérale que l'on utilise pour la formation de la séquence A.

4. Utilisation des copolymères séquencés suivant la revendication 1 pour la fabrication de matières à mouler à bonne ouvrabilité.

FIG. 1

FIG. 2

FIG.3

FIG.4